# FASCICULE DE BREVET EUROPEEN

(11) **EP 1 795 266 B1**
(45) Date de publication et mention de la délivrance du brevet: **23.09.2009**
(21) Numéro de dépôt: 06125754.9
(22) Date de dépôt: 08.12.2006
(51) Int. Cl.: B05B 1/00, B32B 3/12

(54) **Procédé de dépoussiérage de plaques alvéolaires, soufflette de dépoussiérage**
Verfahren und Blasdüse zum Entfernen der Späne von Alveolarplatten
Process and blowing nozzle for blowing dust from alveolar plates

(30) Priorité: 09.12.2005 FR 0553820
(43) Date de publication de la demande: 13.06.2007
(73) Titulaire: DS Smith Kaysersberg, 68320 Kunheim (FR)
(72) Inventeur: Coste, Jean-Philippe, 68240 Kaysersberg (FR); Porret, Laurent, 68000 Colmar (FR); Bauer, Denis, 68340 Riquewihr (FR)
(74) Mandataire: David, Daniel

(56) Documents cités:
- EP-A- 0 343 327
- EP-A- 0 372 902
- EP-A- 1 277 568
- WO-A-02/064272
- DE-A1- 2 413 614
- US-A- 5 069 738

## Description

La présente invention concerne le domaine des plaques alvéolaires, notamment obtenues par extrusion d'une matière thermoplastique dans une filière plane.

La fabrication de plaques alvéolaires en matière thermoplastique, telle que le polycarbonate, est en soi bien connue. Ces plaques sont constituées de deux feuilles planes parallèles que l'on désigne sous le terme de couvertures, distantes l'une de l'autre et reliées entre elles par des parois orientées selon une même direction parallèle aux couvertures et formant entretoises. Elles définissent des alvéoles ou canaux. Ces structures peuvent aussi contenir des parois internes intermédiaires, par exemple parallèles aux couvertures, pour en améliorer le caractère isolant ainsi que des parois inclinées en diagonales pour en augmenter la rigidité. Elles sont fabriquées par extrusion d'une matière plastique à travers une filière plane de forme appropriée suivie du passage entre des parois de calibrage contre lesquelles les couvertures sont maintenues appliquées par aspiration pendant le refroidissement.
L'écartement des parois définit l'épaisseur de la plaque. Après refroidissement, on découpe la plaque continue en plaques de plus petites dimensions au moyen d'une scie généralement.

Lors de la découpe à la scie, il se forme des copeaux ou de fines particules de matière plastique qui adhèrent aux parois des alvéoles, et dont le nettoyage est difficile.

Le brevet US 5,069,738 montre la découpe de plaques alvéolaires extrudées et EP 1277568 montre une plaque avec une pluralité d'alvéoles superposées.
EP 372902 et DE 2413614 décrivent des buses de nettoyage ou d'entraînement de particules de la surface d'un substrat.

EP-0343327-A décrit une soufflette selon le préambule de la revendication 6.

La demanderesse s'est fixé comme objectif la mise au point d'un procédé pour dépoussiérer la zone de coupe transversale d'une plaque alvéolaire comportant deux feuilles de couverture et une pluralité de parois intermédiaires entre les deux feuilles définissant un nombre n d'alvéoles longitudinales séparées par des cloisons parallèles ou inclinées par rapport aux deux feuilles. La distance séparant deux cloisons parallèles adjacentes définit la hauteur d'ouverture de l'alvéole formée par les dites cloisons.

Le procédé conforme à l'invention présente les caractéristiques selon la revendication 1.

De préférence les jets séparés sont sensiblement circulaires et ont un diamètre plus petit que la hauteur des alvéoles. Lorsque le jet est en forme de lame mince, son épaisseur est, de préférence également, inférieure à la hauteur des alvéoles.

Par rapport au soufflage traditionnel au pistolet, l'invention présente les avantages d'un soufflage plus rapide, d'une efficacité améliorée du soufflage, et en particulier d'une forte réduction sonore.

L'invention s'applique ainsi particulièrement bien à la zone de coupe dans un procédé de fabrication d'une plaque alvéolaire comprenant l'extrusion de matière thermoplastique dans une filière plane pour former des alvéoles longitudinales, son calibrage entre deux plaques de calibrage et la découpe par sciage transversal.

L'invention concerne aussi la soufflette selon la revendication 6 pour la mise en oeuvre du procédé.
Elle comprend un élément tubulaire avec une arrivée de gaz à une extrémité et une pluralité d'orifices, notamment alignés, ou au moins un orifice en forme de fente étroite, d'injection de gaz à l'autre extrémité.

Conformément à une autre caractéristique, la soufflette comporte un moyen de guidage pour guider le déplacement de la soufflette le long d'une plaque alvéolaire. Ce moyen de guidage est de préférence constitué d'une rainure et sa largeur est au moins égale à l'épaisseur ou hauteur totale de la plaque au dépoussiérage de laquelle elle est destinée.

On présente plus en détail le procédé de l'invention dans la description qui suit de deux modes de réalisation non limitatifs de l'invention, en référence aux dessins annexés sur lesquels :
La figure 1 montre en coupe une filière d'extrusion de l'art antérieur, vue en coupe transversale selon un plan parallèle à la direction d'extrusion;
La figure 2 montre plus en détail la tête de filière en perspective ;
La figure 3 montre une plaque à structure alvéolaire complexe avec en traits fantômes la soufflette en place ;
La figure 4 montre vue de face une soufflette conforme à l'invention ;
La figure 5 montre une vue en coupe selon V-V de la figure 4 ;
La figure 6 montre vue de face une variante de soufflette conforme à l'invention ;
La figure 7 montre une vue en coupe selon VII - VII de la figure 6.

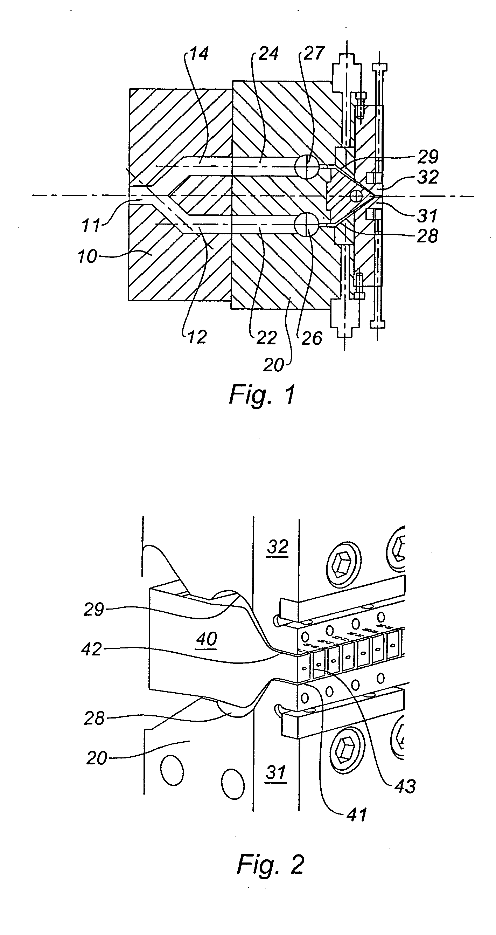

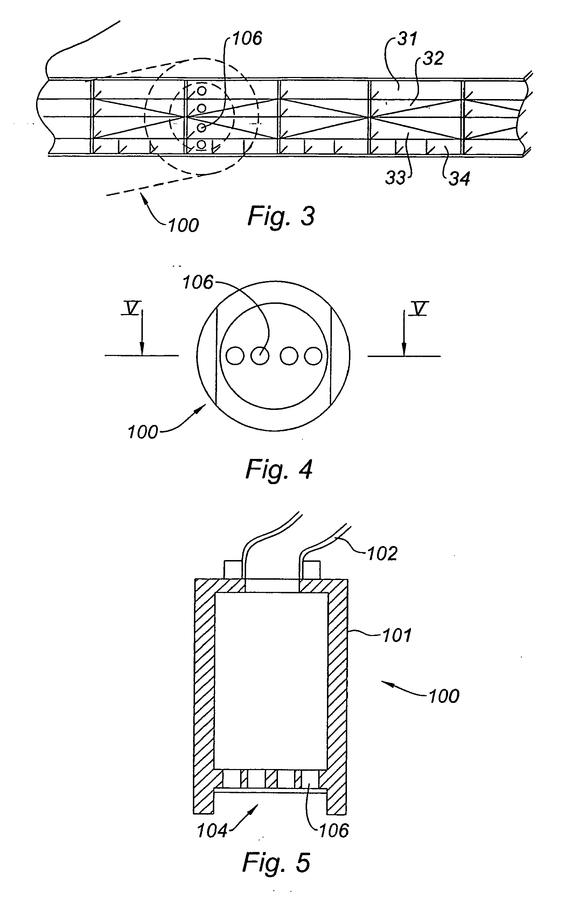

La filière comprend un bloc d'alimentation 10 avec un canal d'alimentation 11 à section oblongue à l'entrée. Le canal 11 se divise en deux canaux 12 et 14, l'un supérieur l'autre inférieur. Le bloc 10 est solidaire de la tête de filière 20. Les deux canaux 12 et 14 communiquent avec deux canaux 22 et 24 qui débouchent chacun dans un conduit, 26 et 27, horizontal et perpendiculaire au plan de la figure 1. Ces conduits alimentent, par des perçages pratiqués sur leur longueur, chacun un canal de laminage 28 et 29. Ces canaux s'étendent sur toute la largeur de la filière, 31 et 32. En se reportant à la figure 2, on voit plus en détail la partie aval de la filière. Les canaux de laminage 28 et 29 sont délimités par le poinçon 40 d'une part et le bloc de tête de filière 20 avec les éléments 31 et 32 formant les lèvres d'autre part. Les pièces 31 et 32 formant les lèvres peuvent être ajustées pour former un étranglement sur toute la largeur des canaux. La filière peut comprendre aussi des barres d'étranglement, ici non représentées, permettant un réglage de l'épaisseur de la veine sur la largeur de la filière. La partie aval du poinçon est en forme de peigne avec des parois 41 et 42 horizontales. Les parois sont à distance déterminée des lèvres 31 et 32 formant ainsi des canaux plans. Des fentes 43, ici perpendiculaires aux parois 41 et 42, sont ménagées à intervalles réguliers sur toute la largeur du poinçon. En fait la géométrie du poinçon et en particulier des fentes à son extrémité est fonction de la structure désirée de la plaque. Par exemple la plaque de la figure 3 comportant une pluralité de cloisons internes nécessite un poinçon avec des fentes du peigne permettant leur formation.

La matière fournie par l'extrudeuse non représentée, est introduite dans le canal d'alimentation 11. Elle se divise en deux flux et est laminée dans les canaux de laminage 28 et 29 jusqu'à former deux nappes parallèles au niveau de la partie aval de la filière entre les parois 41 et 42 du poinçon et les pièces 31 et 32 formant les lèvres. Une quantité de matière est dérivée dans les fentes 43 ou elle forme des cloisons ou entretoises délimitant des alvéoles ou canaux parallèles au sens de l'avancement. A la sortie de la filière, la plaque à section alvéolaire ainsi formée, encore à l'état pâteux est dirigée par étirement entre deux panneaux non visibles sur la figure, formant un calibre et où sa forme est figée. La matière est maintenue par aspiration contre les panneaux qui sont parcourus par un fluide de refroidissement pour évacuer la chaleur de la plaque et assurer son refroidissement. La gamme de plaques qu'il est possible de fabriquer ainsi va de 150 g/m² à 4000 g/m² pour des épaisseurs généralement comprises entre 1 et 20 mm.

Le problème se pose au moment de la découpe transversale de la plaque continue en plaques de plus faibles dimensions. On utilise en général une scie mécanique que l'on déplace transversalement au sens d'avancement de la plaque continue. Il est nécessaire de supprimer les copeaux de matière plastique pour rendre les plaques propres et commercialisables. Projeter un gaz comprimé, de l'air le plus souvent, au moyen d'un pistolet à air n'est pas satisfaisant car on doit passer le jet plusieurs fois au même endroit pour enlever ces débris qui ont tendance à adhérer. En outre, le jet d'air comprimé génère un bruit important quand il est dirigé sur la zone de coupe.

Cela est particulièrement sensible sur les plaques à structure complexe comme celle de la figure 3. On voit sur cette plaque 30 une pluralité d'alvéoles dans le sens de la hauteur. Il y a trois parois ou cloisons parallèles aux couvertures définissant quatre alvéoles 31, 32, 33 et 34. Ces alvéoles sont subdivisées en outre ici par des cloisons en diagonales. L'alvéole 34 près de la couverture inférieure est elle même subdivisée par des cloisons verticales. La largeur des alvéoles 31 à 34 est définie par l'écartement des cloisons perpendiculaires aux feuilles de couverture. Les alvéoles 31 à 34 se répètent sur toute la largeur de la plaque.

Conformément à un mode de réalisation de l'invention, on emploie une soufflette d'air présentant une pluralité de petits orifices, sensiblement circulaires, pour la projection d'air dans les alvéoles. Leur diamètre est choisi pour qu'un jet, convenablement orienté parallèlement aux couvertures et placé, ne chevauche pas deux alvéoles adjacentes.

La soufflette 100 que l'on voit sur les figures 4 et 5 comprend un corps cylindrique creux 101 avec sur un côté une alimentation 102 en air comprimé. Et sur l'autre côté une rainure 104 rectiligne dans le fond de laquelle sont ménagées quatre orifices 106 circulaires de faible diamètre. Ces orifices communiquent avec la cavité 108 du corps cylindrique 101. La largeur de la rainure correspond à l'épaisseur ou hauteur de la plaque à dépoussiérer et les orifices sont dimensionnés et écartés les uns des autres en fonction de ses alvéoles.

Sur la figure 3, on voit la soufflette, représentée en traits fantômes, en place sur la plaque 30 par la rainure 104. Chaque orifice 106 vient se placer devant une alvéole 31, 32, 33 et 34 respectivement. Quand on fait glisser la soufflette le long de la coupe transversale de la plaque, on balaye l'ensemble des alvéoles. Ainsi après découpe de la plaque, on peut aisément et rapidement éliminer les copeaux qui se sont formés en envoyant par ce moyen de fins jets d'air comprimé dans chaque alvéole parallèlement aux couvertures. La pression de l'air est déterminée expérimentalement.

Dans ce mode de réalisation le nombre d'orifices est déterminé en fonction du nombre n d'alvéoles définies par les cloisons intermédiaires parallèles aux parois de couvertures. Dans cet exemple, quatre orifices paraissent suffisants. Une certaine latitude est laissée à l'homme de l'art pour définir le diamètre des trous individuels. Il est inférieur de préférence à la distance ou hauteur séparant deux cloisons intermédiaires adjacentes.

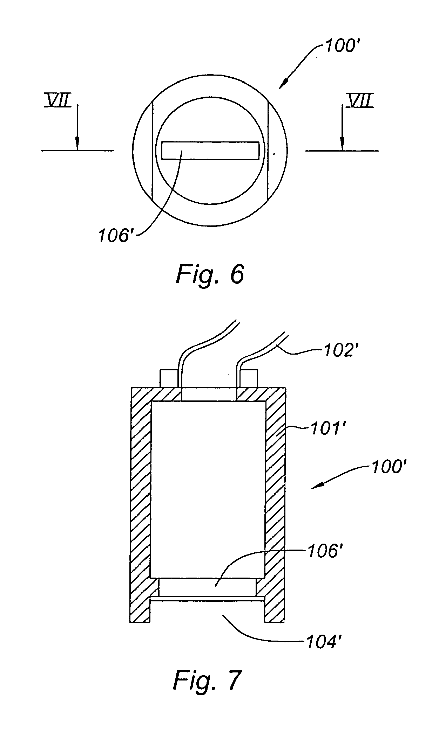

Selon le mode de réalisation des figures 6 et 7, on retrouve la soufflette 100' avec un corps cylindrique 101' creux alimenté en air comprimé par un tube d'alimentation 102' et débouchant dans une fente 106' mince ménagée dans le fond d'une rainure 104'. La largeur de la rainure 104' correspond à la hauteur de la plaque à dépoussiérer et la largeur de la fente mince est de l'ordre de la hauteur d'une alvéole. De cette façon on délivre un jet d'air en forme de lame mince. On pourrait aussi remplacer la fente unique par deux ou trois fentes de hauteur plus faible.

## Revendications

1. Procédé pour dépoussiérer la zone de coupe transversale d'une plaque alvéolaire (30) comportant deux feuilles de couverture et une pluralité de parois intermédiaires entre les deux feuilles définissant un nombre n d'alvéoles (31, 32, 33, 34) longitudinales, séparées par des cloisons parallèles ou inclinées par rapport aux deux feuilles, **caractérisé par le fait que** l'on injecte simultanément un gaz dans au moins une partie desdites n alvéoles par des jets séparés ou bien par au moins un jet en forme de lame mince disposés dans une soufflette manuelle comportant un moyen de guidage le long de la plaque, et à guider la soufflette le long de la zone de coupe transversale.

2. Procédé selon la revendication précédente dans lequel les jets séparés sont sensiblement circulaires et ont un diamètre plus petit que la hauteur des alvéoles.

3. Procédé selon la revendication 2 dans lequel les jets sont alignés.

4. Procédé selon la revendication 1 dont le jet est en forme de lame mince d'épaisseur inférieure à la hauteur des alvéoles.

5. Procédé de fabrication d'une plaque alvéolaire comprenant l'extrusion de matière thermoplastique dans une filière plane pour former des alvéoles longitudinales, son calibrage entre deux plaques de calibrage et la découpe par sciage transversal, la zone de coupe étant dépoussiérée selon le procédé de l'une des revendications 1 à 4.

6. Soufflette pour la mise en oeuvre du procédé selon l'une des revendications précédentes comprenant un élément tubulaire (101) avec une arrivée de gaz (102) à une extrémité et une pluralité d'orifices (106) ou au moins un orifice (106') en forme de fente étroite pour l'injection de gaz à l'autre extrémité **caractérisée par le fait qu'**elle comporte un moyen de guidage pour guider le déplacement de la soufflette le long d'une plaque alvéolaire.

7. Soufflette selon la revendication précédente dont les orifices (106) sont alignés.

8. Soufflette selon la revendication précédente dont le moyen de guidage est constitué d'une rainure (104).

9. Soufflette selon la revendication précédente dont la largeur de la rainure (104) est au moins égale à l'épaisseur de la plaque (30) au dépoussiérage de laquelle elle est destinée.

10. Soufflette selon l'une des revendications 6 et 7 dont le ou les orifices (106, 106') sont disposés en fond de rainure (104).

## Claims

1. A method for removing dust from the cross-section area of cellular plate (30) comprises two cover sheets and a plurality of intermediate walls in between the two sheets defining a number n of longitudinal cells (31, 32, 33, 34), separated by partition walls parallel or slanted with respect to the two sheets, **characterised in that** a gas is simultaneously injected in at least one part of said n cells by separated jets or by at least one thin blade jet, provided in a manual air gun comprising a guide means along the plate, and **in that** the air gun is guided along the cross section area.

2. The method according to the preceding claim, wherein the separated jets are substantially circular and have a diameter smaller than the height of the cells.

3. The method according to claim 2, wherein the jets are in line.

4. The method according to claim 1, wherein the jet has a thin blade shape with a thickness smaller than the height of the cells.

5. A method for manufacturing a cellular plate comprising extruding thermoplastic material in a flat die for forming longitudinal cells, calibrating the same in between two calibrating plates and cutting, by a transversal sawing, the dust being removed from the cutting area according to the method of any of claims 1 to 4.

6. An air gun for implementing the method according to any of the preceding claims, comprising a tubular element (101) with a gas inlet (102) at one end and a plurality of ports (106) or at least one narrow slot shaped port (106') for injecting gas at the other end, **characterised in that** it comprises a guide means for guiding the movement of the air gun along a cellular plate.

7. The air gun according to the preceding claim, wherein the ports (106) are in line.

8. The air gun according to the preceding claim, wherein the guide means is made up of a groove (104).

9. The air gun according to the preceding claim, wherein the width of the groove (104) is at least the same as the thickness of the plate (30) from which it is intended to remove dust.

10. The air gun according to one of claims 6 and 7, wherein the port(s) (106, 106') are provided at the bottom of the groove (104).

## Patentansprüche

1. Verfahren zum Entstauben des Querschnittsbereichs einer Bienenwabenplatte (30), die zwei Deckfolien und eine Vielzahl von Zwischenwänden zwischen den beiden Folien umfasst, die eine Anzahl von N längsgerichteten Bienenwaben (31, 32, 33, 34) definieren, die durch parallele oder im Verhältnis zu den beiden Folien geneigte Trennwände getrennt sind, **dadurch gekennzeichnet, dass** gleichzeitig ein Gas in mindestens einen Teil der N Bienenwaben eingeblasen wird über getrennte Strahlen, oder aber über mindestens einen Strahl in Form einer dünnen Lamelle, die in einer manuellen Blasvorrichtung angeordnet sind, die ein Mittel zur Führung an der Platte entlang umfasst, und dass die Blasvorrichtung an dem Querschnittsbereich entlang geführt wird.

2. Verfahren nach dem vorhergehenden Anspruch, wobei die getrennten Strahlen im Wesentlichen kreisförmig sind und einen Durchmesser aufweisen, der kleiner ist als die Höhe der Bienenwaben.

3. Verfahren nach Anspruch 2, wobei die Strahlen fluchtrecht sind.

4. Verfahren nach Anspruch 1, wobei der Strahl in Form einer dünnen Lamelle mit einer Dicke vorliegt, die geringer ist als die Höhe der Bienenwaben.

5. Verfahren zum Herstellen einer Bienenwabenplatte, umfassend das Strangpressen eines Thermoplasts in einer Breitschlitzdüse, um längliche Bienenwaben zu bilden, das Kalibrieren derselben zwischen zwei Kalibrierplatten und das Ausschneiden durch Quersägen, wobei der Schnittbereich nach dem Verfahren nach einem der Ansprüche 1 bis 4 entstaubt wird.

6. Blasvorrichtung zur Durchführung des Verfahrens nach einem der vorhergehenden Ansprüche, umfassend ein röhrenförmiges Element (101) mit einer Gaszufuhr (102) an einem Ende und einer Vielzahl von Öffnungen (106) und mindestens einer Öffnung (106') in Form eines schmalen Spalts zum Einblasen von Gas an dem anderen Ende, **dadurch gekennzeichnet, dass** sie ein Führungsmittel umfasst, um die Bewegung der Blasvorrichtung entlang einer Bienenwabenplatte zu führen.

7. Blasvorrichtung nach dem vorhergehenden Anspruch, wobei die Öffnungen (106) fluchtrecht sind.

8. Blasvorrichtung nach dem vorhergehenden Anspruch, wobei das Führungsmittel aus einer Rille (104) besteht.

9. Blasvorrichtung nach dem vorhergehenden Anspruch, wobei die Breite der Rille (104) mindestens gleich der Dicke der Platte (30) ist, für deren Entstaubung sie vorgesehen ist.

10. Blasvorrichtung nach einem der Ansprüche 6 und 7, wobei die Öffnung(en) (106, 106') auf dem Boden der Rille (104) angeordnet ist bzw. sind.
